**Europäisches Patentamt**

**European Patent Office**

**Office européen des brevets**

(11) Veröffentlichungsnummer: **0 510 263 A1**

# EUROPÄISCHE PATENTANMELDUNG

(21) Anmeldenummer: **91250112.9**

(51) Int. Cl.⁵: **F28D 20/00**

(22) Anmeldetag: **25.04.91**

(43) Veröffentlichungstag der Anmeldung:
**28.10.92 Patentblatt 92/44**

(84) Benannte Vertragsstaaten:
**AT BE CH DE DK ES FR GB GR IT LI LU NL SE**

(71) Anmelder: **BERGAKADEMIE FREIBERG**
**Akademiestrasse 6**
**O-9200 Freiberg(DE)**

(72) Erfinder: **Naumann, Rüdiger Dr.**
**Mendelejewstrasse 5**
**O-9200 FREIBERG(DE)**
Erfinder: **Emons, Hans Heinz, Prof.**
**Richard Wagner Strasse 23**

**O-9200 FREIBERG(DE)**
Erfinder: **Eildermann, Christine Dipl-Ing.**
**Seefelder Strasse 50**
**O-1092 BERLIN(DE)**
Erfinder: **Biedermann, Andreas Dipl.Ing.**
**Rigaer Strasse 15**
**O-1035 BERLIN(DE)**
Erfinder: **Günther, Andreas Ing.**
**Maybachstrasse 2b**
**O-1570 Potsdam(DE)**
Erfinder: **Schwarze, Wolfgang Dipl.Ing.**
**Am alten Markt 5**
**O-1560 Potsdam(DE)**

(54) **Ouasidynamischer Latentwärmespeicher.**

(57) Der quasidynamische Latentwärmespeicher ist für die Wärme- bzw. Kältespeicherung unter Nutzung der Schmelzwärme ausgewählter Stoffe vorgesehen. Er dient zur Überbrückung von Zeitunterschieden zwischen Wärmeanfall und Wärmebedarf und zum Ausgleich von Leistungsdifferenzen von Wärmeanlagen bzw. von Kälteanlagen.

Der Erfindung liegt die technische Aufgabe zugrunde, einen Latentwärmespeicher zu entwickeln, bei dem die Wärmeübertragung über Siede- und Kondensationsprozesse erfolgt, bei dem alle bekannten Latentwärmespeichermaterialien prinzipiell einsetzbar sind und auf die Verwendung von Halogenkohlenwasserstoffen als Wärmetransportmedium verzichtet werden kann.

Der quasidynamische Latentwärmespeicher besteht aus einem geschlossenen Behälter (1), der boden- und deckenseitig mit Wärmeübertragern (2,3) versehen ist, und der Latentwärmespeichermaterial und eine Wärmetransportflüssigkeit enthält, wobei sich das Latentwärmespeichermaterial im Wärmespeicher erfindungsgemäß in Behälterteilen (4) mit flexiblen Wänden befindet und der Speicherraum mit diesen Behälterteilen so ausgefüllt ist, daß zwischen den bodenseitigen und den deckenseitigen Wärmeübertragern Strömungskanäle verbleiben.

EP 0 510 263 A1

Die Erfindung betrifft einen quasidynamischen Latentwärmespeicher, der für die Wärme- bzw. Kältespeicherung unter Nutzung der Schmelzwärme ausgewählter Stoffe vorgesehen ist. Er dient zur Überbrückung von Zeitunterschieden zwischen Wärmeanfall und Wärmebedarf und zum Ausgleich von Leistungsdifferenzen von Wärmeanlagen bzw. von Kälteanlagen. Vorzugsweise ist er für die Nutzung von Anfall- und Umweltwärme für die Verwendung in Industrie und Haushalt, z. B. Warmwasserbereitung, Heizung, Klimatisierung u.ä. geeignet.

Für die Speicherung von Wärme werden derzeit Stoffe wie Wasser oder Öl verwendet, die aufgrund ihrer großen spezifischen Wärmekapazität technisch relevante Speicherkapazitäten ergeben. Nachteilig für Speicher auf der Basis von fühlbarer Wärme ist, daß stets größere Temperaturdifferenzen erforderlich sind, woraus bedeutende exergetische Verluste resultieren. Zur Überwindung dieser Nachteile wird angestrebt, große Speicherdichten in möglichst schmalen Temperaturbereichen zu erzielen. Es ist bekannt, daß hierfür die latenten Wärmeübergänge von Schmelzen/Erstarren und Gitterumwandlungen von Salzhydraten, wasserfreien Salzen und organischen Verbindungen ausgenutzt werden können. Prinzipiell sind diese Verbindungen in statischen und dynamischen Latentwärmespeichern einsetzbar.

Bei statischen Latentwärmespeichern wird die wärmespeichernde Verbindung in Behälter großer Oberfläche gebracht, um große Wärmeübertragungsleistungen zu erzielen. Am bekanntesten sind die Speicherstäbe oder Speicherkugeln [H. Hedmann, Energy Technology 1 (1986), 10], bei denen das Latentwärmespeichermaterial sich in luftdicht verschlossenen Polypropylenbehältern befindet und die Wärmeübertragung durch Luft oder Öl über die Behälterwände erfolgt. Nachteil der statischen Latentwärmespeicher ist, daß die Wärmeübertragungsleistung beim Ein- bzw. Ausspeisevorgang infolge der schlechten Wärmeleitfähigkeit der Latentwärmespeichermaterialien sehr stark abfällt und die durch den Phasenwechsel bedingte Volumenänderung bei der Konstruktion der Behälter, z.B. durch unvollständiges Füllen dieser, zu berücksichtigen ist. Störend wirken sich auch die Permeation flüchtiger Bestandteile, z. B. von Wasser des Latentwärmespeichermaterials oder des wärmeübertragenden Mediums durch die Behälterwände aus, die zu Änderungen der Temperaturlage des Latentpunktes und zum Verlust der Speicherkapazität führen. Zur Umgehung dieser Nachteile wurden verschiedene dynamische Latentwärmespeicher entwickelt. Nach US 4154 292 wird das Latentwärmespeichermaterial durch Drehen des Speicherbehälters bewegt und die Wärmeübertragung über die Behälterwand vorgenommen. Eine andere Lösung stellt die Direktkontaktwärmeübertragung dar, bei der sich das Latentwärmespeichermaterial im direkten Kontakt mit dem wärmetransportierenden Medium befindet. Nach F. Lindner und K. Scheunemann, Forschungsbericht DFVLR-FB 81 - 32, Stuttgart/BRD und A. E. Founda, G. J. G. Despault, J. P. Tayler und C. E. Capes, Solar Energy 25 (1980) 437 werden Wärmeträgeröle durch das Latentwärmespeichermaterial geleitet. Nachteilig hierbei sind der technische Aufwand, die Gewährleistung der Betriebssicherheit des speicherinternen Ölkreislaufes und der Exergieverlust durch erforderliche zusätzliche Wärmeübertrager. Die Direktkontaktwärmeübertragung zum Latentwärmespeichermaterial mittels einer leicht siedenden Flüssigkeit und in den Speicherbehälter integrierter Wärmeübertragern ist nach WO 81/00574 und DD-WP 225 857 bekannt. Diese Variante ermöglicht den gleichzeitigen Wärmeein- und Wärmeaustrag bei hohen Wärmeübertragungsleistungen, führt allerdings zu einer starken Einengung der Verwendungsmöglichkeit bekannter Latentwärmespeichermaterialien, da eine chemisch stabile, optimal kristallisierende Latentwärmespeichermischung vorliegen muß. Die Wärmetransportflüssigkeit darf das Latentwärmespeichermaterial nicht oder nur in sehr begrenztem Umfang lösen und die Dichte der Wärmetransportflüssigkeit muß im Betriebszustand des Speichers größer als die des Latentwärmespeichermaterials sein. Unter Berücksichtigung des notwendigen Siedepunktes sind deshalb als Wärmetransportflüssigkeiten in der Regel nur Halogenkohlenwasserstoffe, insbesondere Freone, anwendbar. Im Havariefall können austretende Halogenkohlenwasserstoffe allerdings zu einer erheblichen Umweltbelastung führen.

Der gleichzeitige Wärmeein- und Wärmeaustrag ist bei den Speichern nach DD 147 405 und DD 207 758 dadurch realisiert, daß der Wärmespeicher aus zwei voneinander getrennten Wärmeübertrager enthaltenden Druckkammern besteht, die zum Teil mit einem flüssigen Wärmetransportmedium gefüllt sind und die Trennwand zwischen den Druckkammern Latentspeichermaterial enthält. Nachteilig bei diesen Speichern ist jedoch die geringe Wärmeübertragungsleistung.

Der Erfindung liegt die technische Aufgabe zugrunde, einen Latentwärmespeicher zu entwickeln, bei dem die Wärmeübertragung über Siede- und Kondensationsprozesse erfolgt, bei dem alle bekannten Latentwärmespeichermaterialien prinzipiell einsetzbar sind und auf die Verwendung von Halogenkohlenwasserstoffen als Wärmetransportmedium verzichtet werden kann.

Gelöst wird die technische Aufgabe durch einen quasidynamischen Latentwärmespeicher, bestehend aus einem geschlossenen Behälter, der boden- und deckenseitig mit Wärmeübertragern versehen ist, der das Latentwärmespeichermaterial und eine Wärmetransportflüssigkeit enthält, wobei sich das Latentwärmespeichermaterial im Wärmespeicher erfindungsgemäß in Behälterteilen mit flexiblen Wänden befindet und der Speicherraum mit diesen Behälterteilen so ausgefüllt ist, daß zwischen den bodenseitigen und den deckenseitigen Wärmeübertragern Strömungskanäle verbleiben. Die Behälterteile mit flexiblen Wänden sind dabei dünnwandige Kunststoffbehälter wie dünnwandige Kapseln, dünnwandige Beutel und insbesondere dünnwandiger Kunststoffschlauch. Abhängig von der Arbeitstemperatur des Speichers sind als Materialien thermoplastische Kunststoffe, wie Polyethylen, Polypropylen oder Polyvinylchlorid geeignet. Bei großvolumigen Speichern ist es zweckmäßig, wenn zwischen bodenseitigem und deckenseitigem Wärmeübertrager etagenbodenförmige Einbauten angeordnet sind, damit beim Betrieb des Speichers die erforderlichen Strömungskanäle erhalten bleiben und die Behälterteile mit flexiblen Wänden nicht durch eine zu große Packungshöhe so stark belastet werden, daß sie zerstört werden.

Zur Vermeidung starker Druckbelastungen des Wärmespeichers sollte der Siedepunkt der eingesetzten Wärmetransportflüssigkeit in der Nähe des Schmelzpunktes bzw. Phasenumwandlungspunktes des verwendeten Latentwärmespeichermaterials liegen.

Beim Wärmeeintrag über den bodenseitigen Wärmeübertrager verdampft die Wärmetransportflüssigkeit und gibt Ihre Verdampfungswärme über die flexiblen Wände der Behälterteile an das darin befindliche Latentwärmespeichermaterial ab, wodurch dieses schmilzt. Umgekehrt wird beim Wärmeaustrag über den im Dampfraum befindlichen Wärmeübertrager Wärmetransportflüssigkeit kondensiert. Das abtropfende Kondensat verdampft beim Kontakt mit den mit Latentwärmespeichermaterial gefüllten Behälterteilen erneut, solange eine Temperaturdifferenz zwischen Wärmeübertagereingang und dem Latentwärmespeichermaterial besteht. Unter den Bedingungen der Siede- und Kondensationswärmeübertragung entstehen im Wärmespeicher Druckänderungen, bedingt durch den Dampfdruck-Tempertur-Zusammenhang der Wärmetransportflüssigkeit. Im Ladezustand des Speichers liegt ein höherer Druck als im entladenen Zustand vor. Die bei niederem Druck mit Latentwärmespeichermaterial gefüllten Behälterteile mit flexiblen Wänden werden mit steigendem Ladezustand zunehmend zusammengedrückt, woraus ein optimaler Wärmekontakt zwischen Behälterwand und Latentwärmespeichermaterial resultiert. Damit werden Verluste der Wärmeübertragungsleistung des Latentwärmespeichers infolge der Erniedrigung der Wärmeleitfähigkeit des Latentwärmespeichermaterials im schmelzflüssigen gegenüber dem festen Zustand vermindert. Im Verlaufe von Lade- und Entladezyklen erfolgt abhängig von der Dicke der flexiblen Wände der Behälterteile eine die Einstellung des Schmelz- und Erstarrungsgleichgewichtes begünstigende Bewegung des Latentwärmespeichermaterials. Die Anordnung des Latentwärmespeichermaterials im Wärmespeicher in einem oder mehreren Behälterteilen mit flexiblen Wänden bietet die Möglichkeit des leichten Austausches sowie des Einbaus mehrerer bei unterschiedlicher Temperaturen schmelzenden Latentwärmespeichermaterialien. Bei Verwendung mehrerer bei unterschiedlichen Temperaturen schmelzenden Latentwärmespeichermaterialien resultieren große Speicherdichten in breiten Temperaturbereichen. Die Problematik der Initiierung der Kristallisation wird wie allgemein üblich durch die Anwendung von Keimbildnern oder durch die Bevorratung von Kristallisat gelöst.

Konzentrationsänderungen des Latentwärmespeichermaterials, z.B. des Wassergehaltes von Salzhydraten infolge Permeation durch die flexiblen Behälterteilwände, sind dadurch ausschließbar, daß eine gleichartige Aktivität der durch das flexible Material diffudierenden Komponente in der Wärmetransportflüssigkeit eingestellt wird. Beispielsweise kann bei Verwendung von Salzhydraten als Latentwärmespeichermaterial der Wärmetransportflüssigkeit Wasser zugesetzt werden.

Der Vorteil des erfindungsgemäßen quasidynamischen Latentwärmespeichers besteht darin, daß die Wärmeübertragung über Siede- und Kondensationsprozesse erfolgt, alle bekannten Latentwärmespeichermaterialien prinzipiell einsetzbar sind und auf die Verwendung von Halogenkohlenwasserstoffen als Wärmetransportmedium verzichtet werden kann.

Die Erfindung soll anhand der folgenden zwei Beispiele näher erläutert werden:

Beispiel 1

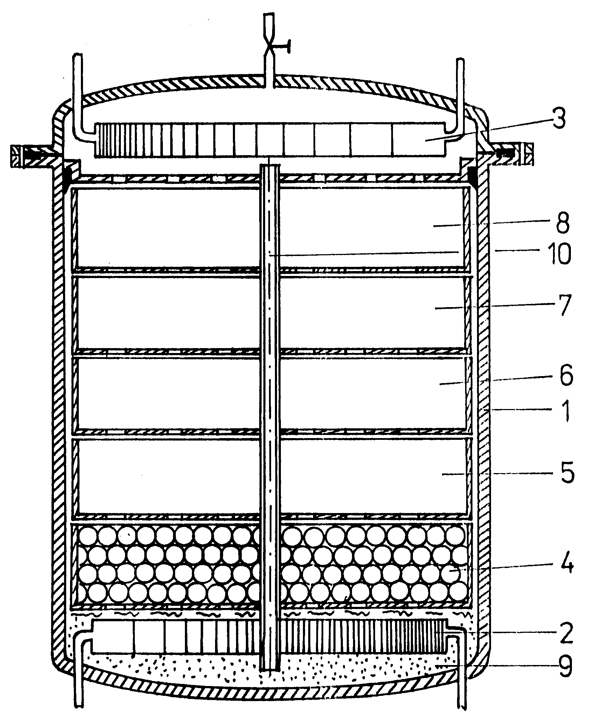

Figur 1 zeigt einen quasidynamischen Latentwärmespeicher, bestehend aus einem geschlossenen Behälter 1, der bodenseitig mit dem Wärmeübertrager 2 zum Wärmeeintrag und deckenseitig mit dem Wärmeübertrager 3 zum Wärmeaustrag versehen ist. Das Behältervolumen ist durch etagenbodenförmige Einbauten in die Etagen 4 - 8 aufgeteilt. Als Latentwärmespeichermaterial wird die eutektisch schmelzende Mischung von 58,7 % $Mg(NO_3)_2 \cdot 6H_2O$ und 41,3 % $MgCl_2 \cdot 6H_2O$, Schmelzpunkt 59 °C verwendet, das sich in spiralförmigen angeordneten dünnwandigen HD-Polyethylenschläuchen, Durchmesser 5 cm, auf den Etagen 4 - 8 befindet. Als Wärmetransportflüssigkeit 9 dient Pentan, daß 2 % Wasser enthält. Die Wärmetransportflüssigkeit 9 hat über die dampfförmige und flüssige Phase mittels Steigrohr 10 mit dem Latentwärmespeicherbehälter Kontakt. Dieser Latentwärmespeicher wird im Temperaturbereich von 45 - 65 °C betrieben.

Beim Wärmeeintrag über den Wärmeübertrager 2 verdampft die Wärmetransportflüssigkeit 9 und gibt ihre Kondensationswärme über die HD-Polyethylenschlauchwand an das Latentwärmespeichermaterial ab, wodurch dieses schmilzt. Umgekehrt wird beim Wärmeaustrag über den Wärmeübertrager 3 Dampf der Wärmetransportflüssigkeit kondensiert. Das Kondensat verdampft an der Polyethylenschlauchwand erneut, wodurch das $Mg(NO_3)_2 \cdot 6H_2O$ - $MgCl_2 \cdot 6H_2O$-Gemisch kristallisiert.

Mit der eingesetzten Speicherfüllung hat der quasidynamische Latentwärmespeicher einen Arbeitsdruckbereich von 146 bis 267 kPa. Im Mittel beträgt die Speicherdichte 245 $MJ/m^3$ Salzhydratmischung. Die mittlere Wärmeübertragungsleistung liegt bei 10,5 kW/t Salzhydrat bei einer Eingangstemperatur am Wärmeübertrager 2 von 70 °C und am Wärmeübertrager 3 von 35 °C.

Beispiel 2

In dem quasidynamischen Latentwärmespeicher nach Figur 1 wird die Latentwärmespeichermasse je zur Hälfte aus einer eutektischen Mischung von 58,7 % $Mg(NO_3)_2 \cdot 6H_2O$ und 41,3 % $MgCl_2 \cdot 6H_2O$ und mit 0,5 % $Na_2S_2O_5$ enthaltenden stabilisierten $Na_2S_2O_3 \cdot 5H_2O$ gebildet. Die Latentwärmespeichermasse befindet sich in zwei getrennten dünnwandigen HD-Polyethylenschläuchen, Durchmesser 5 cm. Die Füllung mit $Na_2S_2O_3 \cdot 5H_2O$ wurde dabei unter Ausschluß von Luft durchgeführt. Als Wärmetransportflüssigkeit wird Pentan verwendet, daß 2 % Wasser enthält. Der Latentwärmespeicher besitzt durch die unterschiedlichen Latentwärmespeichermassen zwei Erstarrungsbereiche bei 48 °C und 59 °C. Im Arbeitsbereich von 45 bis 65 °C beträgt die Speicherdichte 330 $MJ/m^3$ Latentwärmespeichermasse. Die mittlere Wärmeübertragungsleistung liegt bei 16 kW/t Salzhydrat bei einer Eingangstemperatur am Wärmeübertrager 2 von 70 °C und am Wärmeübertrager 3 von 35 °C.

**Patentansprüche**

1. Quasidynamischer Latentwärmespeicher, bestehend aus einem geschlossenen Behälter, der boden- und deckenseitig mit Wärmeübertragern versehen ist, und der Latentwärmespeichermaterial und eine Wärmetransportflüssigkeit enthält, gekennzeichnet durch folgende Merkmale:
   - das Latentwärmespeichermaterial befindet sich im Wärmespeicher in Behälterteilen mit flexiblen Wänden,

   - der Speicherraum ist mit diesen Behälterteilen so ausgefüllt, daß zwischen dem bodenseitigen und dem deckenseitigen Wärmeübertrager Strömungskanäle verbleiben.

2. Quasidynamischer Latentwärmespeicher nach Anspruch 1, gekennzeichnet dadurch, daß die Behälterteile mit flexiblen Wänden aus thermoplastischen Kunststoffen bestehen.

3. Quasidynamischer Latentwärmespeicher nach Anspruch 1 und 2, gekennzeichnet dadurch, daß die Behälterteile mit flexiblen Wänden dünnwandige Kunststoffkapseln, Kunststoffbeutel bzw. ein Kunststoffschlauch oder mehrere Kunststoffschläuche sind.

4. Quasidynamischer Latentwärmespeicher nach Anspruch 1 und 2, gekennzeichnet dadurch daß, die flexiblen Wände der Behälterteile aus Polyethylen, Polypropylen oder Polyvinylchlorid bestehen.

5. Quasidynamischer Latentwärmespeicher nach Anspruch 1, gekennzeichnet dadurch, daß zwischen bodenseitigem und deckenseitigem Wärmeübertrager etagenbodenförmige Einbauten angeordnet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 114 600 (NEWTON) <br> * Spalte 4, Zeile 60 - Spalte 6, Zeile 58; Abbildungen 1-3 * <br> --- | 1-3,5 | F28D20/00 |
| X | FR-A-2 407 434 (C.G.E.) <br> * Seite 3, Zeile 26 - Seite 6, Zeile 15; Abbildungen 1-3 * | 1,5 | |
| A | --- | 2-4 | |
| X | DE-A-3 010 850 (BUDERUS AG) <br> * Seite 4, Zeile 23 - Seite 5, Zeile 18; Abbildungen 1,2 * | 1 | |
| A | --- | 2-5 | |
| X | EP-A-0 330 312 (BALTIMORE AIRCOIL CO.INC.) <br> * Spalte 4, Zeile 48 - Spalte 6, Zeile 36; Abbildungen 1-6 * <br> --- | 1-4 | |
| X | FR-A-2 506 433 (C.G.E.) <br> * Seite 3, Zeile 7 - Seite 5, Zeile 26; Abbildungen 1,2 * <br> ----- | 1-5 | **RECHERCHIERTE SACHGEBIETE (Int. Cl.5 )** <br><br> F28D |

Der vorliegende Recherchenbericht wurde für alle Patentansprüche erstellt

| Recherchenort | Abschlußdatum der Recherche | Prüfer |
|---|---|---|
| DEN HAAG | 03 DEZEMBER 1991 | BELTZUNG F.C. |